# EUROPEAN PATENT APPLICATION

(11) **EP 3 079 252 A2**
(43) Date of publication of application: **12.10.2016**
(21) Application number: 16163991.9
(22) Date of filing: 06.04.2016
(51) Int. Cl.: H02M 7/217, H02M 3/335, H02M 3/155

(54) **UNIVERSAL INPUT VOLTAGE DC-DC CONVERTER EMPLOYING LOW VOLTAGE CAPACITOR POWER BANK**

(30) Priority: 10.04.2015 DK 201570211
(71) Applicant: PR Electronics A/S, 8410 Rønde (DK)
(72) Inventor: NIELSEN, Knud Gade, 8800 Viborg (DK)
(74) Representative: Gregersen, Niels Henrik

(57) **Abstract**

A power supply for generating DC voltage and current based on an AC power input (Vi), which power supply comprises at least one rectifier (D1) adapted to be connected to the AC power input, which rectifier is adapted to be connected to at least one high voltage capacitor (Ci1), which power supply further comprises at least one low voltage capacitor (Ci2), which low voltage capacitor is adapted to be connected through at least one first switch (S1), which high voltage capacitor is adapted to be connected to at least one DC-DC converter, wherein characterized in that the DC-DC converter comprises at least one transformer (T1), which transformer comprises at least one primary coil (N1) and at least a first and a second secondary coils (N3, N2), which first secondary coil is adapted to be connected through at least one semiconductor (D5), which second secondary coil is adapted to be connected through a semiconductor (D3) and a second switch (S2) to the low voltage capacitor, which low voltage capacitor is formed as a capacitor bank.

## Description

### Field of the Invention

The present invention relates to a power supply for generating DC voltage and current based on an AC power input, which power supply comprises at least one rectifier adapted to be connected to the AC power input, which rectifier is adapted to be connected to at least one high voltage capacitor, which power supply further comprises at least one low voltage capacitor, which low voltage capacitor is adapted to be connected through at least one first switch, which high voltage capacitor is adapted to be connected to at least one DC-DC converter.

### Background of the Invention

US7760524 discloses a method and an apparatus to reduce the volume required for bulk capacitors in a power supply. A driver circuit included in a power supply having a rectifier coupled to a single phase AC input voltage is illustrated. The driver circuit includes a drive signal generator to generate a drive signal to be coupled to a variable impedance element. A voltage sensor is coupled to the drive signal generator to sense a voltage across a high voltage capacitor. The driver circuit controls the variable impedance element in response to the voltage sensor. A low voltage capacitor is allowed to receive current from the input if the sensed voltage is less than a first threshold value. The low voltage capacitor is prevented from receiving current from the input if the sensed voltage is greater than a second threshold value.

DC-DC power supplies with universal input voltage, which can be either Direct Current (DC) or Alternating Current (AC) inputs are well-known - the technology is, e.g., described in US5126652 and US2009/0129130. Generally, all implementations of DC-DC power supplies with universal voltage input suffer from the need of bulky capacitors to maintain energy for the converter during the period where the input AC voltage is crossing 0 Volt. These bulk capacitors suffer from the need of a large capacity to maintain sufficient energy storage and a high voltage rating (more than 340 V) to be able to withstand the peak voltage of 240 V alternating current.

### Objects of the Invention

It is the object of the invention to provide a cost-effective implementation of DC-DC power conversion with universal input voltage. The invention is related to low to medium-power DC-DC converters implemented as Surface Mount Technology (SMT). The present invention has an advantage compared to the prior art due to the avoidance of bulky through-hole components while still achieving similar performance.

### Description of the Invention

The objects of the invention are achieved by a power supply as disclosed in the preamble to claim 1 and modified in that the DC-DC converter comprises at least one transformer, which transformer comprises at least one primary coil and at least a first and a second secondary coils, which first secondary coil is adapted to be connected through at least one semiconductor, which second secondary coil is adapted to be connected through a semiconductor and a second switch to the low voltage capacitor, which low voltage capacitor is formed as a capacitor bank.

Hereby, it can be achieved that the capacitor bank can be charged with a low voltage, thereby reducing high voltage drop over serial connected semiconductors. Thus, a number of smaller capacitors with low voltage requirements can be coupled in parallel or series in order to achieve the correct capacitance. The capacitor bank can be formed as a grid of SMT capacitors.

In a preferred embodiment of the invention, the DC-DC converter is based on a flyback topology, wherein current flows in the primary coil when the first switch is closed and current flows in the first and second secondary coils when the first switch is open. Hereby, it can be achieved that charging of the capacitor bank can take place independently of the DC output power.

In a further preferred embodiment of the invention, the DC-DC converter is based on a forward topology, wherein current flows in the primary coil and in the first secondary coil when the first switch is closed and current flows in the second secondary coil when the first switch is open, the second secondary coil being adapted to perform demagnetization of the transformer. Hereby, it can be achieved that the power derived by demagnetizing the transformer can be used for charging the capacitor bank.

In a further preferred embodiment of the invention, the first switch is configured to be opened during the period where the DC-DC converter is supplied from the low voltage capacitor. Hereby, it can be achieved that if the voltage at the high voltage capacitor is low because of a high power demand at the DC output, the capacitor bank keeps the voltage at a higher level during charging of the capacitor bank.

In a further preferred embodiment of the invention, the first and second switches are adapted to be controlled simultaneously by a controller so as to obtain power factor correction. Hereby, it can be achieved that charging of the capacitor bank takes place by increasing the magnetic field in the transformer.

In a further preferred embodiment of the invention, the power supply further comprises a third switch (S3) adapted to be controlled by the controller in such a way that the third switch is kept open until the input supply voltage is at the limit of operation of the DC-DC converter and is closed otherwise in order to supply the DC-DC converter. Hereby, the discharge of the low voltage capacitor bank can be controlled by the controller. The capacitor bank can be charged, and the discharge is only used by a demand defined by the controller.

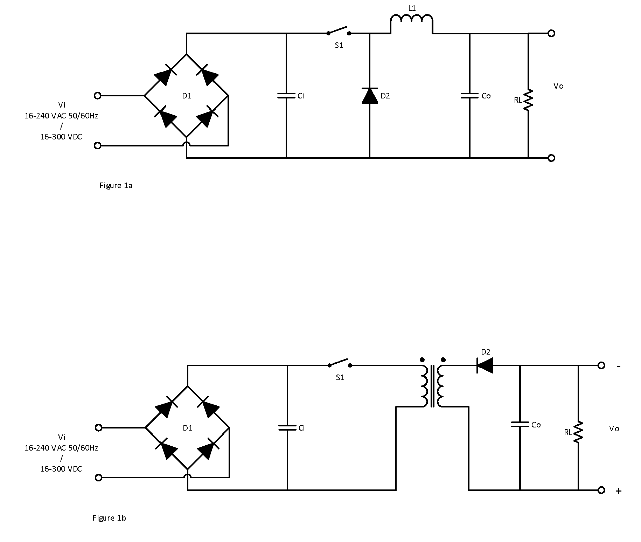

The present invention solves a problem concerning short time energy storage in conjunction with AC input DC-DC converters. Traditionally, a large energy storage based on a large capacitor bank (Ci in Figure 1) is used to avoid disturbance of the DC-DC conversion when the AC input voltage is lower (due to zero-crossing) than the required input voltage for the DC-DC converter. This capacitor bank suffers from the high voltage rating (typically higher than 340 V) and the need of high capacitance, causing the capacitors to be large, high weight, space consuming and unavailable in SMT components.

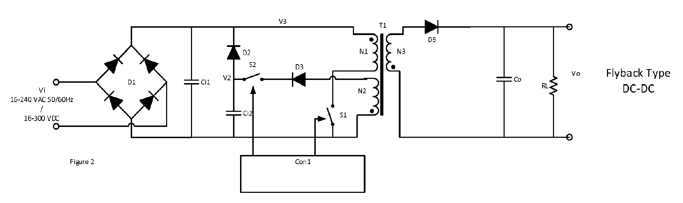

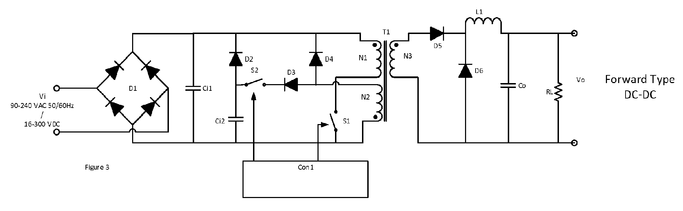

The present invention discloses a technique to use a low voltage (typically less than 50 V rating) capacitor bank (Figures 2 and 3, Ci2), which is charged to an appropriate voltage level above the minimum input voltage for the DC-DC converter during the period where the AC input voltage is above the minimum input voltage for the DC-DC voltage. The capacitor bank (Ci2) will supply the DC-DC converter with energy during the zero-crossing of the input AC voltage (Vi).

The invention makes it possible to design cost-effective power supplies without bulky capacitors.

Note that although the drawings relate to isolated flyback and forward converter topologies, the invention is not limited to the latter but can also be used together with any DC-DC converter where the input supply voltage is an AC voltage.

### Description of the Drawing

Figure 1a discloses the prior art basic principle of a non-isolated DC-DC buck converter.
Figure 1b discloses the prior art basic principle of an isolated flyback DC-DC converter.
Figure 2 discloses a flyback type DC-DC converter.
Figure 3 discloses a forward type DC-DC converter.
Figure 4a discloses the AC input voltage.
Figure 4b discloses the rectified AC input voltage.
Figure 4c discloses an exploded view of the rectified voltage.
Figure 4d discloses the average output current.
Figure 5 discloses a flyback topology.

### Detailed Description of the Invention

Figure 1a discloses the prior art basic principle of a non-isolated DC-DC buck converter with universal input voltage capable of handling both AC and DC power supplies. The charging capacitor (Ci) needs to be sufficiently large to ensure proper operation of the DC-DC converter during the period the input AC voltage (Vi) crosses zero voltage.

Figure 1b discloses the prior art basic principle of an isolated flyback DC-DC converter.

Figure 2 discloses a flyback type DC-DC converter, where Ci2 is a low voltage capacitor, which is charged through switch (S2) and diode (D3) during the period where the input voltage (Vi) is sufficiently high to ensure proper operation of the DC-DC converter. During zero-crossing of the input AC voltage (Vi), the capacitor bank (Ci2) will provide energy to the DC-DC converter through the diode (D2). The controller (Con1) controls the switch (S1), which performs the fast switching for the DC-DC conversion and the switch (S2), which controls the charging of the capacitor bank.

Figure 3 discloses a forward type DC-DC converter, where the demagnetizing winding (N2) is used for charging the capacitor bank (Ci2) through switch (S2) and diode (D3). During the period where the capacitor bank (Ci2) is supplying the DC-DC converter, the diode (D4) is ensuring the demagnetizing of the transformer (T1).

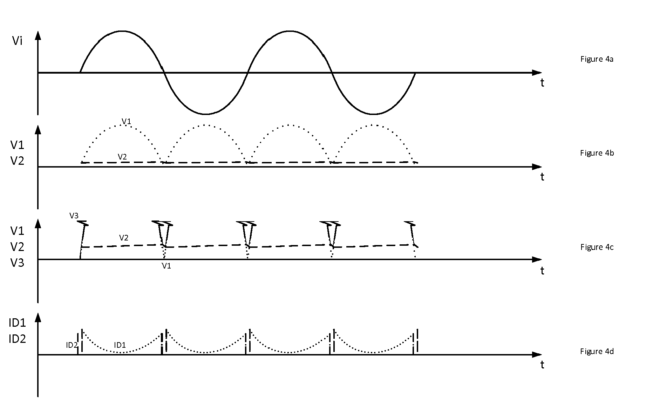

Figure 4a discloses the AC input voltage (Vi).

Figure 4b discloses the rectified AC input voltage (V1, dotted line) as it appears without high voltage charge capacitors (Ci1) and the voltage at the low voltage capacitor bank (V2, dashed line).

Figure 4c discloses an exploded view of the rectified voltage (V1, dotted line), the voltage at the low voltage capacitor bank (V2, dashed line) and the input voltage for the DC-DC converter (V3, solid line).

Figure 4d discloses the average output current (ID1, dotted line) of the rectifier bridge (D1) and the average current (ID2, dashed line) through the diode (D2) supplying energy from the low voltage capacitor bank.

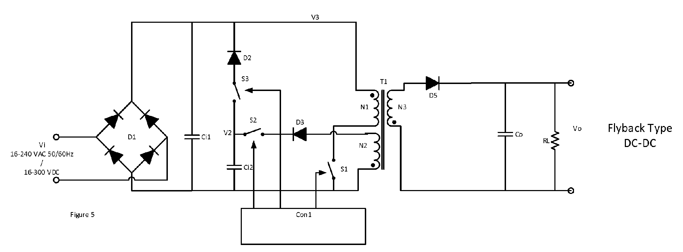

Figure 5 discloses a flyback topology, where the diode (D2) releasing the energy from the low voltage capacitor power bank has been serialized with a switch (S3), which is controlled by the controller (Con1). The switch (S3) can be employed to optimize the use of the energy stored in the low voltage capacitor bank (Ci2).

The present invention will make it possible to implement low-power to medium power DC-DC converter with universal input voltage covering AC input voltage in the voltage range from 16 VAC to 240 VAC (340 V peak) or a DC input voltage of 16 VDC to 300 VDC in a cost effective way. Bulky, high voltage, typically leaded, capacitors can be replaced by low voltage SMT capacitors.

The functionality is described in the following. The rectifier bridge (D1) rectifies the input voltage (Vi) in case of AC input voltage. In case of DC input voltage, only two of the diodes in the bridge will be conducting. The capacitor (Ci), which in the prior art acts as an energy reservoir for the DC-DC converter during the zero-crossing of the AC input voltage, can in this implementation theoretically be omitted; however, due to authoritative requirements on conducted and emitted radiation, the capacitor (Ci) may be needed to reduce transient noise from the switch (S1). Nevertheless, the capacitance and thereby the size can be remarkably reduced compared to the prior art.

The primary winding (N1) and secondary winding (N3) of the transformer form together with the switch (S1) and the rectifier diode (D4) the traditional flyback topology. To enable the charging of the low voltage capacitor bank (Ci2), a third, charging winding (N2) has been added on to the transformer (T1). Depending on the input voltage level specification, output voltage level requirement and the design of the low voltage capacitor bank, the coil numbers on each winding shall be designed as ordinary flyback converters taking into account the magnetic performance of the transformer material and the switching frequency of the first switch (S1). The switching frequency of the switch (S1) will typically be in the range of 50 kHz to 10 MHz, depending on output power requirements and transformer material performance and switch capabilities (bandwidth).

During the period where the AC input voltage is above the required input voltage for the DC-DC converter, the switch (S2) is closed and causes the charging of the low voltage capacitor bank (Ci2) through the diode (D3). The capacitor bank will only be charged when the switch (S1) is open and the output diode (D5) will only charge the output capacitor (Co) when the switch (S1) is open.

The controller (Con1) controls the two switches, which may be implemented as Field Effect Transistors, bipolar or IGBT transistors. The controller may be implemented as an integrated DC-DC controller or a microcontroller. The feedback from the output voltage (Vo) may be implemented by an opto-coupler to ensure a stabilized output voltage.

The switch (S2) adjusting the charging of the capacitor bank may be controlled by the microcontroller or by monitoring the current flow in the diode (D2). If a current is flowing in (D2), the switch (S2) is permanently open, so unnecessary current consumption from the capacitor bank (Ci2) is avoided. By intelligent control of the switch (S2), a power factor correction can be implemented.

Furthermore, to enable a more efficient use of the low voltage capacitor bank, the diode (D2) releasing the energy from the low voltage power bank can be placed in series with a switch (S3, Fig. 5), which is controlled by the controller (Con1) and which is kept open until the input voltage supply is at the limit of operation of the DC-DC converter. By this operation of the switch (S3), the period where the low voltage capacitor bank (Ci2) is supplying the DC-DC converter is minimized, thereby a maximum utilization of the low voltage capacitor bank is achieved.

## Claims

1. A power supply for generating DC voltage and current based on an AC power input (Vi), which power supply comprises at least one rectifier (D1) adapted to be connected to the AC power input, which rectifier is adapted to be connected to at least one high voltage capacitor (Ci1), which power supply further comprises at least one low voltage capacitor (Ci2), which low voltage capacitor is adapted to be connected through at least one first switch (S1), which high voltage capacitor is adapted to be connected to at least one DC-DC converter, which DC-DC converter comprises at least one transformer (T1), which transformer comprises at least one primary coil (N1) and at least a first and a second secondary coils (N3, N2), **characterized in that** the first secondary coil is adapted to be connected through at least one semiconductor (D5), which second secondary coil is adapted to be connected through a semiconductor (D3) and a second switch (S2) to the low voltage capacitor, which low voltage capacitor is formed as a capacitor bank.

2. The power supply according to claim 1, wherein the DC-DC converter is based on a flyback topology, wherein current flows in the primary coil when the first switch (S1) is closed and current flows in the first and second secondary coils when the first switch is open.

3. The power supply according to claim 1, wherein the DC-DC converter is based on a forward topology, wherein current flows in the primary coil and in the first secondary coil when the first switch (S1) is closed and current flows in the second secondary coil when the first switch is open, the second secondary coil being adapted to perform demagnetization of the transformer.

4. The power supply according to any of claims 1-3, wherein the first switch is configured to be opened during the period where the DC-DC converter is supplied from the low voltage capacitor.

5. The power supply according to any of claims 1-4, wherein the first and second switches are adapted to be controlled simultaneously by a controller (Con1) so as to obtain power factor correction.

6. The power supply according to any of claims 1-5, wherein the power supply further comprises a third switch (S3) adapted to be controlled by the controller in such a way that the third switch is kept open until the input supply voltage is at the limit of operation of the DC-DC converter and is closed otherwise in order to supply the DC-DC converter.
